# EUROPÄISCHE PATENTANMELDUNG

(11) **EP 0 754 718 A2**
(43) Veröffentlichungstag der Anmeldung: **22.01.1997**
(21) Anmeldenummer: 96110729.9
(22) Anmeldetag: 03.07.1996
(51) Int. Cl.: C08J 3/03, C08L 33/06, C09D 133/06

(54) **Wässrige fremdemulgierte Acrylatharzdispersionen**

(30) Priorität: 10.07.1995 DE 19525088
(71) Anmelder: HOECHST AKTIENGESELLSCHAFT, 65926 Frankfurt am Main (DE)
(72) Erfinder: Schmidt, Holger, Dr., 65195 Wiesbaden (DE); Kubillus, Uwe, Dr., 65195 Wiesbaden (DE); Geisler, Jörg-Peter, Dr., 55128 Ingelheim (DE)

(57) **Zusammenfassung**

Wäßrige Acrylatharzdispersionen enthaltend Massenanteile im Feststoff von
(A) 5 bis 50 % einer hydrophilen Polyesterkomponente und
(B) 95 bis 50 % eines Hydroxylgruppen- und Säuregruppen-haltigen Acrylatcopolymeren, ein Verfahren zu ihrer Herstellung und ihre Verwendung als Bindemittelkomponente in Ein- und Zwei-Komponentenlacken.

## Beschreibung

Die Erfindung betrifft wäßrige fremdemulgierte Acrylatharzdispersionen, die hydrophile Polyester als Emulgatoren enthalten, und deren Verwendung in wasserverdünnbaren Einbrenn-Klarlacken und Einbrenn-Uni-Decklackensowie Zweikomponenten-Systemen, die bei Temperaturen zwischen Raumtempera tur und Einbrenntemperaturen eingesetzt werden können.

Acrylatharze als Bindemittel in Lacken sind beispielsweise aus der DE-A 29 42 327 und aus der EP-A 0 056 971 bekannt. Die damit hergestellten Lacke sind jedoch lösungsmittelhaltig. Wasserverdünnbare selbstemulgierte Acrylatharze, die in wäßrigen Decklacken eingesetzt werden können, sind beispielsweise in der DE-A 40 09 031 und in der EP-A 0 619 329 beschrieben. Die Lacke enthalten jedoch Hilfslösungsmittel, die mit Wasser mischbar sind und beim Trocknen oder Einbrennen durch Verdampfen in die Atmosphäre gelangen. Bei größeren Schichtdicken von Beschichtungen aus solchen Lacken zeigen sich Oberflächenfehler, sogenannte Kocher. Aus technischen und ökologischen Gründen ist es wünschenswert, den Lösungsmittelgehalt in Lacken zu erniedrigen oder sogar vollständig lösungsmittelfreie Lacke zur Verfügung zu stellen. Insbesondere für das sogenannte "base coat - clear coat"-Verfahren in der Decklackierung von Automobilen ist es wünschenswert, einen wäßrigen Klarlack zu verwenden, der keine oder nur geringe Mengen Lösungsmittel enthält.

Die Aufgabe der Erfindung bestand daher darin, Acrylatharzdispersionen zur Verfügung zu stellen, die in Bindemitteln verwendet werden können und die Applikation auch in größeren Schichtdicken ohne Oberflächenfehler ermögli chen. Es wurde gefunden, daß fremdemulgierte Acrylatharzdispersionen mit Hydroxyl- und Säuregruppen im Acrylatcopolymeren und einem hydrophilen Polyester als Emulgator in Kombination mit geeigneten Vernetzungsmitteln diese Aufgabe lösen.

Gegenstand der Erfindung sind wäßrige Einbrennlacke, also wäßrige Einbrenn-Klarlacke und wäßrige Einbrenn-Uni-Decklacke, dadurch gekennzeichnet, daß als Bindemittel wäßrige lösungsmittelfreie oder lösungsmittelarme Dispersionen von Hydroxylgruppen- und Säuregruppen-haltigen Acrylatharzen eingesetzt werden, wobei hydrophile Polyester als Emulgatoren verwendet werden. Gegenstand der Erfindung sind weiter wäßrige Zweikomponenten-Bindemittelsysteme, die erfindungsgemäße Acrylatharzdispersionen enthalten.

Unter lösungsmittelarm werden im Sinne dieser Erfindung solche Dispersionen verstanden, die maximal einen Massenanteil von 20 %, bevorzugt bis zu 15 % Lösungsmittel enthalten, wobei die Lösungsmittel mit Wasser mischbar sind.

Gegenstand der Erfindung sind weiter die wäßrigen Acrylatharz-Dispersionen, gekennzeichnet durch einen Massenanteil von
(A) 5 bis 50 % einer hydrophilen Polyesterkomponente und
(B) 50 bis 95 % Hydroxylgruppen- und Säuregruppen-haltiges Acrylatharz im Festkörper.
Der Festkörper-Massenanteil in der Dispersion beträgt erfindungsgemäß 10 bis 70 %, bevorzugt 20 bis 60 % und besonders bevorzugt 30 bis 50 %; der Rest besteht bei den lösungsmittelarmen Dispersionen aus einem Gemisch von Wasser und einem oder mehreren mit Wasser mischbaren Lösungsmitteln, bei den bevorzugten lösungsmittelfreien Dispersionen besteht der Rest lediglich aus Wasser.

Gegenstand der Erfindung sind auch die hydrophilen Polyester (A), die als Emulgatoren in den erfindungsgemäßen Dispersionen eingesetzt werden. Es können auch Mischungen von hydrophilen Polyestern gemäß (A) verwendet werden. Der hydrophile Charakter der Polyester wird erreicht durch einen Stoffmengenanteil von 1 bis 20 %, bezogen auf die Summe der Stoffmengen der Edukte des Polyesters, an ionischen oder ionogenen oder nichtionischen hydrophilen Bausteinen. Bevorzugt werden zur Herstellung der Polyester Stoffmengenanteile 3 bis 15, besonders bevorzugt 5 bis 13 % an hydrophilen Bausteinen eingesetzt. Geeignete ionische Bausteine sind solche, die neben den zur Polykondensation erforderlichen funktionellen Gruppen (Hydroxyl- und Säure-, bevorzugt Carbonsäuregruppen) auch ionische, also kationische oder anionische Gruppen aufweisen, oder Strukturen enthalten, die solche ionische Gruppen bilden können. Beispiele sind Säuregruppen wie Carboxyl-, Sulfonsäure-, Sulfinsäure-, Phosphonsäure- und Phosphinsäure-Gruppen und kationenbildende Gruppen wie Phosphin- und Aminogruppen, bevorzugt tertiäre Aminogruppen, sowie die von diesen durch Umsetzung mit Basen bzw. Säuren oder Quaternisierungsagenzien wie beispielsweise Methyljodid erhältlichen ionischen Gruppen. Durch Einbau von nichtionischen hydrophilen Gruppen wie z.B Polyoxyalkylenäthersegmenten, deren Alkylengruppen ausgewählt sind aus Äthylen- und Propylen-Gruppen sowie deren Mischungen, lassen sich nichtionische hydrophile Polyester herstellen, die ebenfalls für die Erfindung geeignet sind. Diese Polyester sind vorzugsweise rein aliphatische Polyester, deren polyesterbildende Bausteine also ausschließlich aus aliphatischen Hydroxylverbindungen und aliphatischen organischen Säuren bzw. deren Ester oder Anhydride bestehen. Die aliphatischen Hydroxylverbindungen und Säuren bzw. deren Ester oder Anhydride können dabei linear, verzweigt oder cyclisch sein. Bevorzugt werden Polyester aus zweibasigen Säuren und Dihydroxyaliphaten, wobei auch bis zu 10 % der Stoffmengen an zweibasigen Säuren und Dihydroxyverbindungen durch drei- oder mehrbasige Säuren bzw. durch Verbindungen mit drei oder mehr Hydroxylgruppen ersetzt sein können. Ein Vorzugsbereich für den Stoffmengenanteil an dreiwertigen Verbindungen ist 1 bis 5 %. Es ist weiter bevorzugt, bei höheren Gehalten (über 3 mol je 100 mol) an dreiwertigen Verbindungen auch einbasige Säuren bzw. Monohydroxyverbindungen mit Stoffmengenanteilen von jeweils bis zu 3 % bezogen auf die Summe der Stoffmengen an Säuren bzw. Hydroxylverbindungen zuzusetzen, um die molaren Massen der so hergestellten Polyester nach oben zu begrenzen.

Die Polyester (A) werden vorzugsweise aus den Hydroxyverbindungen und den Säuren unter Zusatz von solchen Verbindungen hergestellt, die als Veresterungskatalysatoren bekannt sind. Geeignete Verbindungen sind Brönsted- und Lewis-Säuren und Basen sowie Oxide und Salze von Metallen der Haupt- und Nebengruppen des Periodensystems.

Die hydrophilen Bausteine können dabei mit verestert werden, soweit sie die Polykondensation nicht nachteilig beeinflussen. So lassen sich beispielsweise Polyoxyalkylenätherglykole mit bei der Kondensation einsetzen. Bei Verwen dung von Dihydroxysäuren wie Dimethylolpropionsäure oder Dihydroxybern Steinsäure als ionogenem Baustein wird es dagegen bevorzugt, den vorgebildeten Polyester mit diesen ionogenen Verbindungen unter esterbildenden Bedingungen umzusetzen.

Statt der Säuren und Hydroxyverbindungen lassen sich auch esterbildende Derivate dieser Verbindungen einsetzen, wie z. B. Ester der Säuren mit niedrigen aliphatischen Alkoholen, bevorzugt Methylester, Säureanhydride oder Säurehalogenide, sowie Ester der Hydroxyverbindungen mit flüchtigen organischen Säuren wie z. B. Acetate oder Propionate.

Die Säuren und Hydroxyverbindungen lassen sich auch teilweise oder ganz durch Hydroxysäuren ersetzen, die jeweils mindestens eine Hydroxylgruppe und eine Säuregruppe tragen; bevorzugt sind Verbindungen mit jeweils einer Hydroxyl- und einer Säuregruppe.

Geeignete Edukte für die Polyester sind aliphatische Dicarbonsäuren mit 2 bis 40, bevorzugt 4 bis 36 Kohlenstoffatomen. Unter diesen Verbindungen werden die linearen Dicarbonsäuren Oxalsäure, Malonsäure, Glutarsäure, Adipinsäure, Korksäure, Sebacinsäure sowie die sogenannten dimeren Fettsäuren bevorzugt. Geeignete verzweigte aliphatische Dicarbonsäuren sind z.B. Dimethylbernsteinsäure,Butylmalonsäure,Diäthylmalonsäure,Dimethylglutarsäure und Methyladipinsäure. Geeignete cycloaliphatische Dicarbonsäuren sind beispielsweise Hexahydrophthalsäure sowie Hexahydroiso- und -terephthalsäure. Gegebenenfalls können geringe Anteile (bis zu 10 % der Stoffmenge) der aliphatischen Dicarbonsäuren auch durch aromatische Dicarbonsäuren ersetzt werden. Hierfür eignen sich z.B. die isomeren Phthalsäuren, 4,4'-Sulfonyldibenzoesäure, 4,4'-Diphenylätherdicarbonsäure und 4,4'-Benzophenondicarbonsäure.

Geeignete Dihydroxyverbindungen sind lineare, verzweigt oder cyclische aliphatische Diole mit 2 bis 40, bevorzugt 2 bis 20 Kohlenstoffatomen. Als geeignete lineare Diole werden Äthylenglykol, 1,2- und 1,3-Propylenglykol, 1,4-Butandiol, 1,6-Hexandiol, die oligomeren und polymeren Polyglykole wie Polyoxyäthylen-und Polyoxypropylenglykol,gemischte Polyoxyäthylen/propylenglykole und Polyoxybutylenglykol genannt. Ebenfalls geeignet sind verzweigte Diole wie Neopentylglykol, 2,2,4-Trimethyl-1,3-pentandiol, Pinakol, und cyclische Diole wie Cyclohexandimethanol, Perhydro-Bisphenol A, 1,2- und 1,4-Cyclohexandiol.

Geeignete Hydroxysäuren sind beispielsweise Milchsäure, γ-Hydroxybuttersäure, δ-Hydroxyvaleriansäure und ε-Hydroxycapronsäure; diese Hydroxysäuren können auch in der Form der Lactone eingesetzt werden. In geringen Mengen (bis zu 10 mol / 100 mol der Hydroxysäuren oder Diole und Disäuren) lassen sich auch Verbindungen mit einer Säuregruppe und zwei oder mehr Hydroxylgruppen oder auch Verbindungen mit einer Hydroxylgruppe und zwei oder mehr Säuregruppen einsetzen; geeignet sind beispielsweise Hydroxybernsteinsäure und Dimethylolpropionsäure. Man erhält dadurch in geringem Maß verzweigte Polyester.

Durch Einsatz von mindestens dreibasigen Säuren und/oder mindestens dreiwertigen Alkoholen erhält man ebenfalls verzweigte Polyester. Geeignete mehrbasige Säuren sind beispielsweise Cyclohexantricarbonsäure und Butantetracarbonsäure, geeignete mehrwertige Alkohole sind beispielsweise Glycerin, Erythrit, Pentaerythrit, Xylit und Sorbit.

Die Komponente (B) der erfindungsgemäßen wäßrigen Dispersionen sind Acrylatcopolymerisate mit einer Hydroxylzahl von 40 bis 200 mg/g, vorzugsweise 80 bis 160 mg/g und einer Säurezahl von 15 bis 50 mg/g erhalten durch radikalische Copolymerisation in Substanz von
a) 5 bis 40, vorzugsweise 10 bis 30 Teilen mindestens eines Glycidylesters einer in α-Stellung verzweigten aliphatischen gesättigten Monocarbonsäure,
b) 0 bis 30 Teilen, vorzugsweise 5 bis 25 Teilen mindestens eines Diesters einer α,β-olefinisch ungesättigten Dicarbonsäure mit 1 bis 8 C-Atomen in der Estergruppe,
c) 0 bis 70, vorzugsweise 5 bis 45 Teilen mindestens eines vinylaromatischen Kohlenwasserstoffs,
d) 0 bis 60, vorzugsweise 10 bis 40 Teilen eines Alkylesters einer α,β-olefinisch ungesättigten Carbonsäure, vorzugsweise (Meth)acrylsäurealkyl- oder -cycloalkylester, welche einen Alkyl- oder Cycloalkylrest mit 1 bis 18 C-Atomen aufweisen,
e) 2 bis 47,5 Teilen, vorzugsweise 5 bis 30 Teilen mindestens einer α,β-olefinisch ungesättigten Carbonsäure, vorzugsweise (Meth)acrylsäure, wobei die molare Menge der Komponente e) stets größer ist als die molare Menge der Komponente a),
f) 5 bis 47,5 Teilen, vorzugsweise 8 bis 30 Teilen mindestens eines Hydroxyalkylesters einer α,β-olefinisch ungesättigten Carbonsäure, vorzugsweise eines Esters der (Meth)acrylsäure mit mehrwertigen aliphatischen Alkoholen mit 2 bis 6 C-Atomen.

Neben der Komponente a) muß mindestens jeweils eine olefinisch ungesättigte Carbonsäure und ein Hydroxyalkylester einer ungesättigten Carbonsäure bei der Copolymerisation zugegen sein. Es lassen sich auch Mischungen von Acrylatcopolymerisaten gemäß (B) einsetzen. Die Monomeren der Gruppe d), e) und f) werden im folgenden als Acrylmonomere bezeichnet.

Zur Herstellung der Acrylatcopolymerisate können als Komponente a) Glycidylester einer aliphatischen gesättigten Monocarbonsäure mit einem tertiären oder quaternären C-Atom in α-Stellung verwendet werden. Besonders bevorzugt sind Glycidylester stark verzweigter Monocarbonsäuren mit einer Kettenlänge von 9 bis 11 C-Atomen, wie sie zum Beispiel unter dem Handelsnamen CARDURA® erhältlich sind. Die Komponente a) bildet im Verlauf der Herstellung der Acrylatcopolymerisate mit der Komponente e) ein Umsetzungsprodukt, das sich radikalisch mit mindestens einer der Komponenten b), c), d) oder f) copolymerisieren läßt.

Die Komponente b) besteht aus Diestern einer α,β-olefinisch ungesättigten Dicarbonsäure mit 1 bis 8 C-Atomen in der Estergruppe, bevorzugt Maleinsäure- und Fumarsäureester wie Dimethylmaleinat, Diäthylfumarat, Dibutylmaleinat und Dibutylfumarat.

Als Komponente c) lassen sich Verbindungen wie Styrol, α-Methylstyrol und Vinylalkylbenzole mit Alkylresten von 1 bis 3 C-Atomen, zum Beispiel Vinyltoluol, einsetzen.

Die Komponente d) umfaßt Alkylester einer α,β-olefinisch ungesättigten Carbonsäure, vorzugsweise (Meth)acrylsäurealkyl- oder cycloalkylester, welche einen Alkyl- oder Cycloalkylrest mit 1 bis 18 C-Atomen aufweisen, beispielsweise Methyl(meth)acrylat, Äthyl(meth)acrylat, Propyl(meth)acrylat, Butyl(meth)acrylat, Hexyl(meth)acrylat, Äthylhexyl(meth)acrylat, Lauryl(meth)acrylat, Stearyl(meth)acrylat, Cyclohexyl(meth)acrylat, tert-Butylcyclohexyl(meth)acrylat, Trimethylcyclohexyl(meth)acrylat, Isobornyl(meth)acrylat und Dihydrodicyclopentadienyl(meth)acrylat. Der in der Literatur bereits beschriebene viskositätssenkende Effekt von raumerfüllenden, starren Monomeren wie Isobornyl(meth)acrylat zeigt sich auch bei den erfindungsgemäßen Copolymerisaten.

Geeignete Komponenten e) sind α,β-olefinisch ungesättigte Carbonsäuren wie (Meth)acrylsäure, Crotonsäure und Halbester olefinisch ungesättigter Dicarbonsäuren, deren Alkoholkomponente im allgemeinen 1 bis 18 C-Atome hat, und ungesättigte Fettsäuren mit 8 bis 22 C-Atomen wie zum Beispiel Linolensäure, Linolsäure, Ölsäure, Arachidonsäure und Ricinenfettsäure.

Als Komponente f) werden Hydroxyalkylester einer α,β-olefinisch ungesättigten Carbonsäure wie Ester der (Meth)acrylsäure mit mehrwertigen aliphatischen Alkoholen mit 2 bis 6 C-Atomen eingesetzt. Als Beispiele seien genannt 2-Hydroxyäthyl(meth)acrylat, 2-Hydroxypropyl(meth)acrylat, 3-Hydroxypropyl(meth)acrylat, 2-Hydroxybutyl(meth)acrylat, 4-Hydroxybutyl(meth)acrylat, Hexandiolmono(meth)acrylat und Trimethylolpropandi(meth)acrylat.

Die Herstellung der erfindungsgemäßen Acrylatcopolymerisat-Dispersionen erfolgt nach dem Verfahren der Substanzpolymerisation. Unter dem Begriff "Substanzpolymerisation" ist eine Polymerisation zu verstehen, die in der Regel ohne Lösemittel durchgeführt wird. In manchen Fällen ist jedoch auch die Anwesenheit von einem Lösemittel-Massenanteil von bis zu 35, vorzugsweise 10 bis 25 % möglich. Die Polymerisation wird im allgemeinen so durchgeführt, daß man mindestens einen Teil der Komponente a) allein oder zusammen mit mindestens einem Teil der Komponente b) vorgelegt und bei 120 bis 200 °C ein Gemisch der Komponenten c) bis f) und gegebenenfalls einzusetzenden restlichen Komponenten a) oder b) zusammen mit einem Polymerisationsinitiator und gegebenenfalls mit einem Regler zugibt und in einer Substanzpolymerisation so lange umsetzt, bis ein Umsetzungsgrad von mindestens 95, vorzugsweise mindestens 98 % erreicht ist. Zur Herstellung einer wäßrigen Dispersion wird das so erhaltene Acrylatcopolymerisat zunächst mit 0 bis 35, vorzugsweise 5 bis 25 Teilen eines wasserverdünnbaren organischen Hilfslösemittels angelöst und dann durch Zugabe der entsprechenden Menge einer Base partiell oder vollständig neutralisiert. Das organi sche Hilfslösemittel kann auch ganz oder teilweise zusammen mit den Kom ponenten c) bis f) zugegeben werden. Anschließend wird das ganz oder teilweise neutralisierte Acrylatcopolymer durch normale oder inverse Verdünnung mit Wasser in eine wäßrige Dispersion überführt. Die einzelnen Monomeren a) bis f) werden jeweils in solchen molaren Mengen eingesetzt, daß das fertige Acrylatcopolymerisat die eingangs definierten Hydroxylzahlen und Säurezahlen aufweist.

Als Polymerisationsinitiatoren kommen alle üblichen Starter für die radikalische Copolymerisation in Betracht wie aliphatische Azoverbindungen, zum Beispiel Azobis[isobutyronitril] oder Azobis[2-methylbutyronitril], Diacylperoxide, zum Beispiel Dibenzoylperoxid, Dialkylperoxide, zum Beispiel Di-tert-butylperoxid oder Di-tert-amylperoxid, Alkylhydroperoxide, zum Beispiel tert-Butylhydroperoxid, oder Perester, zum Beispiel tert-Butylperoxybenzoat, tert-Butylperoxy-2-äthylhexanoat oder tert-Amylperoxy-2-äthylhexanoat. Bevorzugt ist Di-tert-butylperoxid in einem Anteil von 0,5 bis 5 %, bezogen auf die Gesamtmasse der Komponenten a) bis f).

Sofern zur Erzielung besonders niedriger mittlerer molarer Massen der Einsatz von Reglern notwendig ist, werden Alkohole, zum Beispiel Butanol, oder Mercaptane, zum Beispiel Dodecylmercaptan, verwendet.

Geeignete organische Hilfslösemittel sind unter anderem wasserverdünnbare ein- oder mehrwertige Alkohole oder Glykole, zum Beispiel Äthanol, n-Propanol, Isopropanol, n-Butanol, Isobutanol, Äthylenglykol, Diäthylenglykol, Triäthylenglykol, Propylenglykol und Glycerin, wasserverdünnbare Monoäther von mehrwertigen Alkoholen, zum Beispiel Methoxypropanol oder Methoxybutanol, sowie wasserverdünnbare Glykoläther wie zum Beispiel Butylglykol oder Butyldiglykol.

Zur Neutralisation der Säuregruppen können sowohl organische Basen als auch anorganische Basen verwendet werden. Vorzugsweise werden primäre, sekundäre und tertiäre Amine, zum Beispiel Äthylamin, Propylamin, Dimethylamin, Triäthylamin, Dibutylamin, Dimethylisopropylamin, Cyclohexylamin, Benzylamin, Morpholin und Piperidin eingesetzt, besonders bevorzugt sind Aminoalkohole, zum Beispiel N,N-Diäthylaminoäthanol, N,N-Dimethylaminoäthanol, Äthanolamin, Diäthanolamin, Triäthanolamin, 2-Amino-2-methylpropanol oder 2-Dimethylamino-2-methyl-1-propanol. Die Neutralisation wird so durchgeführt, daß nach dem Verdünnen mit Wasser stabile Lösungen oder Dispersionen mit einem pH-Wert zwischen 6 und 10, vorzugsweise 7 bis 8,5, resultieren.

Der Feststoff-Massengehalt der wäßrigen Dispersionen wird so eingestellt, daß die Dispersionen nicht zu viskos werden und praktisch handhabbar bleiben. Im allgemeinen stellt man auf Feststoffgehalte von 30 bis 50 % ein.

Aus den so erhaltenen wasserverdünnbaren Dispersionen von Polyacrylatharzen werden wasserverdünnbare Einbrenn-Klarlacke oder wasserverdünnbare Einbrenn-Unidecklacke nach allgemein bekannten Methoden durch Zumischung eines Aminoplastharzes als Vernetzungsmittel und gegebenenfalls üblichen Lackzusatzstoffen wie Katalysatoren, Verlaufs- bzw. Verdickungs mitten, Rheologiehilfsmitteln, Pigmenten, Pigmentpasten, Entschäumern, Netzmitteln, Füllstoffen, Lichtschutzmitteln, Antioxidantien und dergleichen hergestellt.

Als Vernetzungsmittel eignen sich in diesen Beschichtungsmitteln Umsetzungsprodukte von Formaldehyd mit Aminoplastbildnern wie Harnstoff, Alkylenharnstoffen, Melamin und Guanaminen oder deren Äther mit niedrigen Alkoholen wie Methanol oder Butanol, weiter Polyisocyanate sowie Anhydridgruppen enthaltende Verbindungen einzeln oder in Kombination. Der Vernet zer wird jeweils in solch einer Menge zugesetzt, daß das Molverhältnis der OH-Gruppen des Copolymerisats zu den reaktiven Gruppen des Vernetzers zwischen 0,3 : 1 und 3 : 1 liegt.

Geeignete Formaldehyd-Addukte sind bevorzugt solche, die von Harnstoff, Melamin und Benzoguanamin abgeleitet sind sowie die vollständig oder teilweise verätherten Formaldehyd-Amin-Addukte. Besonders bevorzugt werden teilweise oder vollständig mit aliphatischen Alkoholen mit 1 bis 4 C-Atomen verätherte Melamin-Formaldehyd-Addukte als Härtungsmittel eingesetzt. Beispiele für solche kommerziell erhältlichen Härter sind ®Maprenal MF 900 und VMF 3926 (Cassella AG) sowie ®Cymel 303 und 327 (Cytec). Geeignete Mischungsverhältnisse liegen im Bereich von 50 bis 90 Teilen Copolymerisat zu 50 bis 10 Teilen Amin-Formaldehyd-Addukt, bezogen auf Festharz.

Die wasserverdünnbaren Einbrenn-Klarlacke oder wasserverdünnbaren Einbrenn-Unidecklacke enthalten vorzugsweise soviel Aminoplastharz, daß das Gewichtsverhältnis zwischen Polyacrylatharz und Aminoplastharz 60 : 40 bis 90 : 10, besonders bevorzugt 70 : 30 bis 85 : 15, beträgt.

Auch geeignete Formaldehyd-Phenol-Addukte und deren Derivate können als Härter eingesetzt werden.

Diese Vernetzer führen in Gegenwart von Säuren, z.B. p-Toluolsulfonsäure zur Aushärtung der Beschichtung. Die Heißhärtung kann in üblicher Weise bei Temperaturen von 80 bis 200 °C, z.B. in 10 bis 30 Minuten vorgenommen werden.

Für die Härtung der erfindungsgemäßen Produkte, besonders bei moderaten Temperaturen bzw. bei Raumtemperatur, unter Vernetzung im Sinne eines Zweikomponenten-Lacksystems eignen sich vor allem Polyisocyanate. Als Polyisocyanatkomponente kommen im Prinzip alle aus der Polyurethanchemie bekannten aliphatischen, cycloaliphatischen oder aromatischen Polyisocyanate einzeln oder in Mischungen in Betracht. Beispielsweise gut geeignet sind niedermolekulare Polyisocyanate wie beispielsweise Hexamethylendiisocyanat, 2,2,4- und/oder 2,4,4-Trimethyl-1,6-hexamethylendiisocyanat, Dodecamethylendiisocyanat, Tetramethyl-p-xylylendiisocyanat, 1,4-Diisocyanatocyclohexan, 1-Isocyanato-3,3,5-trimethyl-5-isocyanatomethyl-cyclohexan (IPDI), 2,4'- und/oder 4,4'-Diisocyanato-dicyclohexylmethan, 2,4'- und/oder 4,4'-Diisocyanato-diphenylmethan oder Gemische dieser Isomeren mit ihren höheren Homologen, wie sie in an sich bekannter Weise durch Phosgenierung von Anilin-Formaldehyd-Kondensaten zugänglich sind, 2,4- und/oder 2,6-Diisocyanatotoluol oder beliebige Gemische derartiger Verbindungen.

Bevorzugt werden jedoch Derivate dieser einfachen Polyisocyanate eingesetzt, wie sie in der Beschichtungstechnologie üblich sind. Hierzu gehören Polyisocyanate, die beispielsweise Biuretgruppen, Uretdiongruppen, Isocyanuratgruppen, Urethangruppen, Carbodiimidgruppen oder Allophanatgruppen aufweisen, wie sie z.B. in der EP 0 470 461 beschrieben werden. Zu den besonders bevorzugten modifizierten Polyisocyanaten gehören das N,N',N''-Tris-(6-isocyanatohexyl)-biuret und seine Gemische mit seinen höheren Homologen, sowie das N,N',N''-Tris(-6-isocyanatohexyl)-isocyanurat bzw. dessen Gemische mit seinen höheren, mehr als einen Isocyanuratring aufweisenden Homologen.

Die Vernetzung kann durch Zusatz von organischen Metallverbindung, wie Zinnverbindungen und gegebenenfalls tertiären Aminen, vorzugsweise Diäthyläthanolamin, katalysiert werden. Entsprechende Zinnverbindungen sind beispielsweise Dibutylzinndilaurat, Dibutylzinndiacetat und Dibutylzinnoxid.

Für eine Härtung bei erhöhter Temperatur kommen zusätzlich verkappte Polyisocyanate, Polycarbonsäuren bzw. deren Anhydride in Frage.

Vor der Applikation werden die mit den erfindungsgemäßen Dispersionen von wasserverdünnbaren Polyacrylatharzen formulierten wasserverdünnbaren Lacke auf Spritzviskosität - im allgemeinen 20 bis 40 s Auslaufzeit aus dem DIN-Becher 4 (DIN 53 211) - und einen pH-Wert von 7 bis 9 eingestellt.

Die mit den erfindungsgemäßen Dispersionen formulierten wasserverdünnbaren Lacke weisen bei Spritzviskosität einen so hohen Feststoffgehalt bei einem verhältnismäßig niedrigen Anteil an organischen Hilfslösungsmitteln auf, daß bereits mit einem Spritzgang Lackfilme mit ausreichender Schichtstärke (die Dicke des gehärteten Lackfilms sollte vorzugsweise zwischen 30 und 65 µm liegen) erhalten werden, die nach dem Härten (z.B. Einbrennen, forcierte Trocknung) kocherfreie, nicht vergilbende Lackfilme mit gutem Aussehen und hohen Beständigkeiten, insbesondere gegen Schwefelsäure, Xylol und Aceton, ergeben.

Die mit den erfindungsgemäßen Dispersionen formulierten wasserverdünnbaren Einbrenn-Klarlacke eignen sich insbesondere zur Herstellung von Metalleffektlackierungen nach dem base-coat/clear-coat-Verfahren.

Ein Vorteil der Acrylatcopolymerisate liegt darin, daß bei der Herstellung keinerlei Lösemittel abdestilliert werden müssen und sich wasserverdünnbare Bindemittel mit niedrigen mittleren molaren Massen ohne den Zusatz von Reglern herstellen lassen. Daraus resultieren Bindemittel mit einem hohen Festkörpergehalt und einem niedrigen Anteil an organischen Hilfslösungsmitteln.

Ein Vorteil der Dispersionen gegenüber bekannten wasserverdünnbaren Bindemitteln ist die außerordentlich hohe Beständigkeit der damit formulierten wasserverdünnbaren Lacke gegenüber anorganischen Säuren, insbesondere Schwefelsäure. Die als Test für die Resistenz gegen Umwelteinflüsse wie "saurer Regen" herangezogene Schwefelsäurebeständigkeit der wasserverdünnbaren Lacke ist bei Verwendung der erfindungsgemäßen Bindemittel in vielen Fällen sogar besser als die von konventionellen Lacken. In Einbrennlacken, in Kombination mit hochreaktiven, teilverätherten Melamin-Formaldehydharzen werden extrem gute Beständigkeiten gegenüber organischen Agenzien wie Xylol und Aceton gefunden, die weit über denen konventioneller Lacksysteme liegen. Als weiterer Vorteil der erfindungsgemäßen Bindemittel ist die hohe Vergilbungsstabilität bei der Verwendung in Einkomponenten-Einbrennlacken in Kombination mit Aminoplastharzen anzusehen.

Darüberhinaus ist anzumerken, daß die mit den Dispersionen gemäß dieser Erfindung hergestellten Einbrennlacke ohne den in DE-A 40 27 594 beschriebenen Zusatz von fluorierten Verbindungen und ohne freie oder verkappte Polyisocyanate eine gute Wasserbeständigkeit aufweisen. Hierin liegt ein ökologischer Vorteil.

In den nachfolgenden Beispielen bedeuten alle "Teile" Massenanteile und Zahlenangaben mit der Einheit "%" Massenanteile in g/100 g, soweit nicht anders gekennzeichnet.

### Beispiele

### 1) Herstellung eines hydrophilen Polyesters A

In einem 5 l-Kessel werden 493,3 g Adipinsäure (3,45 mol), 541,4 g Pimelinsäure (3,38 mol), 450,2 g Hexandiol-1,6 (3,81 mol; als 529,6 g einer 85 %igen Lösung in Wasser) und 297,8 g Neopentylglykol (2,86 mol; als 330,9 g einer 90 %igen Lösung in Wasser) gefüllt und nach Zusatz von 8,2 g Dibutylzinnoxid als Katalysator gemeinsam aufgeschmolzen, dabei destilliert das Wasser ab. Man heizt weiter bis auf 190 °C unter einem Stickstoffschleier. Es wird solange bei 190 °C gerührt, bis die Trübung verschwindet. Die Säurezahl (SZ = m_{KOH}/m_{Harz}) des Kondensats beträgt ca. 45 mg/g. Das Harz wird auf ca. 110 °C abgekühlt, unter Stickstoff wird 215,2 g (1,60 mol) Dimethylolpropionsäure zudosiert. Es wird wieder unter Stickstoff auf 190 bis 200 °C aufgeheizt und bei dieser Temperatur gehalten, bis die Säurezahl wieder ca. 45 mg/g erreicht hat. Danach wird auf ca. 70 °C abgekühlt. Eine Probe des Harzes zeigt eine Hydroxylzahl (OHZ = m_{KOH}/m_{Harz}) von 83 mg/g, eine Viskosität (gemessen an einer 50 %igen Lösung in n-Butanol in einem Ubbelohde-Viskosimeter bei 23 °C) von 4050 mPa·s und eine Jod-Farbzahl von unter 2. Das Harz wird bei 70 °C auf einen Festkörper-Massenanteil von 90 % mit n-Butanol verdünnt. Durch Zusatz von Dimethylaminoäthanol unter Rühren bei ca. 80 °C wird auf einen Neutralisationsgrad von 80 % eingestellt, anschließend wird mit auf 30 °C erwärmtem voll entsalztem Wasser auf einen Festkörper-Massenanteil von 45 % verdünnt.

### 2) Herstellung eines hydrophilen Polyesters B

Nach dem Verfahren von Beispiel 1 werden 657,7 g Adipinsäure und 485,4 g Sebacinsäure gemeinsam mit 425,5 g Hexandiol-1,6, 297,2 g Diäthylenglykol und 26,8 g Trimethylolpropan aufgeschmolzen und bei 190 °C solange gerührt, bis die Säurezahl einen konstanten Wert von ca. 15 mg/g erreicht hat. Nach Abkühlen gibt man 180 g Dimethylolpropionsäure zu und konden siert weiter, bis die Säurezahl konstant bleibt. Das Harz wird nach Abkühlen mit 183 g n-Butanol aufgenommen zu einem Festkörper-Massenanteil von 90 %. Mit Dimethylaminoäthanol wird auf einen Neutralisationsgrad von 70 % eingestellt, anschließend wird mit voll entsalztem Wasser auf einen Festkörper-Massenanteil von 45 % verdünnt.

### 3) Herstellung eines Acrylatharzes C

358,6 g ®Cardura E10 (Glycidylester der Neodecansäure) werden in einem Kessel mit Rückflußkühler und Rührer vorgelegt und auf 160 °C aufgeheizt. Eine Monomerenmischung bestehend aus 348,6 g Styrol, 263,4 g Methylmethacrylat, 286,6 g Hydroxypropylmethacrylat und 175,6 g Acrylsäure in 226,6 g n-Butanol gelöst mit Zusatz von 26,4 g tert.-Butylperoxy-2-äthylhe xanoat als Radikalbildner wird gleichmäßig zudosiert innerhalb von 6 Stunden. Die Temperatur stellt sich bei Rückfluß auf ca. 135 °C ein. Nach zwei Stunden Nachreaktionszeit wird auf 90 °C gekühlt, dann wird der Polyester A (314,2 g der 45 %igen Lösung) zugesetzt. Das Produkt hat einen Festkörpergehalt von 77 % und eine OH-Zahl von ca. 130 mg/g. Mit N,N-Dimethylaminoäthanol wird bei 80 bis 90 °C auf einen Neutralisationsgrad von 65 % eingestellt, anschließend wird bei einer Temperatur oberhalb von 60 °C soviel voll entsalztes Wasser zugefügt, bis der Festkörper-massenanteil auf 40 % gesunken ist. Die mittlere Teilchengröße dieser Dispersion ist ca. 200 nm.

### 4) Herstellung eines Acrylatharzes D

358,6 g ®Cardura E10 (Glycidylester der Neodecansäure) werden in einem Kessel mit Rückflußkühler und Rührer vorgelegt und auf 160 °C aufgeheizt. Eine Monomerenmischung bestehend aus 348,6 g Styrol, 263,4 g Methylmethacrylat, 286,6 g Hydroxypropylmethacrylat und 175,6 g Acrylsäure in 226,6 g n-Butanol gelöst mit Zusatz von 26,4 g tert.-Butylperoxy-2-äthylhe xanoat als Radikalbildner wird gleichmäßig zudosiert innerhalb von 6 Stunden. Die Temperatur stellt sich bei Rückfluß auf ca. 135 °C ein. Nach zwei Stunden Nachreaktionszeit wird auf 90 °C gekühlt, dann wird der Polyester B (314,2 g der 45 %igen Lösung) zugesetzt. Das Produkt hat einen Festkörpergehalt von 77 % und eine OH-Zahl von ca. 130 mg/g. Mit N,N-Dimethylaminoäthanol wird bei 80 bis 90 °C auf einen Neutralisationsgrad von 65 % eingestellt, anschließend wird bei einer Temperatur oberhalb von 60 °C soviel voll entsalztes Wasser zugefügt, bis der Festkörper-massenanteil auf 40 % gesunken ist. Die mittlere Teilchengröße dieser Dispersion ist ca. 200 nm.

### 5) Herstellung eines wäßrigen Zweikomponenten-Klarlacks aus einem handelsüblichen Acrylharz (Vergleich)

80,6 Teile einer kommerziellen wäßrigen Acrylatharzdispersion (®Macrynal VSM 2521) mit einer Hydroxylzahl von 140 mg/g und einem Festkörper-Massenanteil von 42 % werden vorgelegt; dazu werden 1,9 Teile eines verätherten Melamin-Formaldehydharzes (®Maprenal MF 920) mit 9,9 Teilen voll entsalzten Wassers verdünnt zugegeben. In 4,6 Teilen eines Gemisches von Lösungsmitteln (®Proglyde DMM = Dipropylenglykoldimethyläther, ®Dowanol DPnB = Dipropylenglykol-n-butyläther, MPA = Methoxypropylacetat im Verhältnis 2:1:1) werden 3 Teile Additive (Entschäumer und Licht schutzmittel) gelöst und hinzugefügt.

100 Teile dieser Bindemittelmischung werden mit 20 Teilen einer 80 %igen Lösung eines handelsüblichen Isocyanats (®Desmodur N 3400) in Proglyde DMM vermischt, die Mischung wird anschließend mit entionisiertem Wasser auf eine Spritzviskosität entsprechend einer Auslaufzeit von 25 Sekunden aus einem Becher (gemäß DIN 53 211 bei 23 °C) eingestellt.

### 6) Herstellung eines wäßrigen Zweikomponenten-Klarlacks aus dem Acrylharz C

80,6 Teile der wäßrigen Acrylatharzdispersion aus Beispiel 3 mit einer Hydroxylzahl von 130 mg/g und einem Festkörper-Massenanteil von 4 % werden vorgelegt; dazu werden 1,9 Teile eines verätherten Melamin-Formaldehydharzes (®Maprenal MF 920) mit 9,9 Teilen voll entsalzten Wassers verdünnt zugegeben. In 4,6 Teilen eines Gemisches von Lösungsmitteln (®Proglyde DMM = Dipropylenglykoldimethyläther, ®Dowanol DPnB = Dipropylenglykol-n-butyläther, MPA = Methoxypropylacetat im Verhältnis 2:1:1) werden 3 Teile Additive (Entschäumer und Lichtschutzmittel) gelöst und hinzugefügt.

100 Teile dieser Bindemittelmischung werden mit 20 Teilen einer 80 %igen Lösung eines handelsüblichen Isocyanats (®Desmodur N 3400) in Proglyde DMM vermischt, die Mischung wird anschließend mit entionisiertem Wasser auf eine Spritzviskosität entsprechend einer Auslaufzeit von 25 Sekunden aus einem Becher (gemäß DIN 53 211 bei 23 °C) eingestellt.

### 7) Herstellung eines wäßrigen Zweikomponenten-Klarlacks aus dem Acrylharz D

Es wird wie in Beispiel 6 verfahren, jedoch wird die wäßrige Acrylatharzdispersion aus Beispiel 4 eingesetzt.

### 8) Herstellung eines wäßrigen Zweikomponenten-Klarlacks aus einem handelsüblichen Acrylharz (Vergleich)

Es wird wie in Beispiel 5 verfahren, statt des dort eingesetzten Isocyanats werden 37,5 Teile Isophorondiisocyanat als 70 %ige Lösung in einer Mischung aus Xylol und Methoxypropylacetat eingesetzt.

### 9) Herstellung eines wäßrigen Zweikomponenten-Klarlacks aus dem Acrylharz C

Es wird wie in Beispiel 6 verfahren, statt des dort eingesetzten Isocyanats werden 37,5 Teile Isophorondiisocyanat als 70 %ige Lösung in einer Mischung aus Xylol und Methoxypropylacetat eingesetzt.

### 10) Anwendungstechnische Prüfung der Klarlacke

Die Zweikomponenten-Klarlacke aus den Beispielen 6 bis 9 wurden im Vergleich zu einem handelsüblichen lösungsmittelhaltigen nichtwäßrigen System (®Macrynal SM 510 n / Desmodur N 75) geprüft. Die Resultate sind in der Tabelle zusammengefaßt.

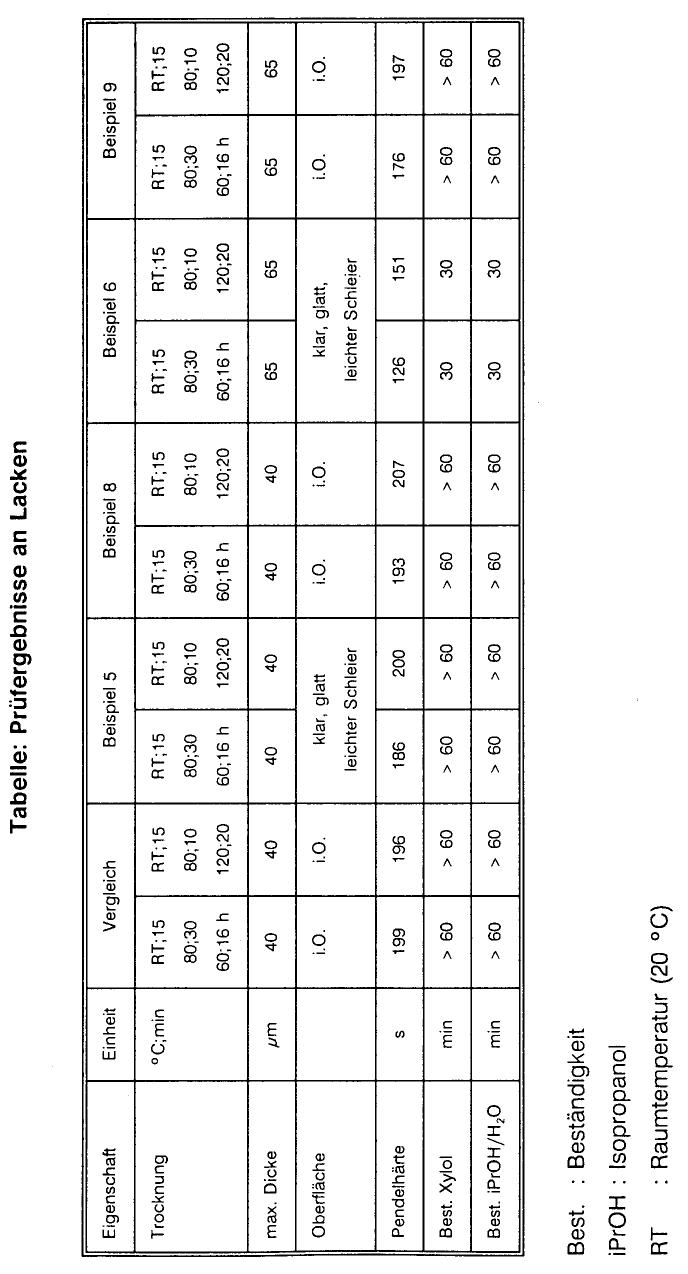

Es ergibt sich, daß die Eigenschaften des fremdemulgierten Systems (Beispiele 6 und 9) denen des selbstemulgierten Systems (Beispiele 5 und 8) ebenbürtig sind. Während sich mit dem selbstemulgierten System maximal Schichtdicken von ca. 40 µm in einem Gang auftragen lassen, ohne daß Oberflächenstörungen resultieren, lassen sich mit dem fremdemulgierten System gemäß der Erfindung bis zu 65 µm starke Schichten in einem Arbeitsgang aufbringen, ohne daß Oberflächenstörungen (in Form von sog. Kochern) auftreten. Die Beständigkeit gegen Chemikalien (16-stündige Belastung mit Korrosionsschutzmittel; jeweils 30 Minuten Belastung mit 37 %iger Schwefelsäure, 1 %iger Natronlauge, Bremsflüssigkeit, Teerprüflösung; sog. Kationen-Anionen-Test) unterscheidet sich bei den getesteten Beschichtungen in der jeweils angegebenen Stärke nicht.

## Patentansprüche

1. Wäßrige Acrylatharzdispersionen enthaltend Massenanteile im Feststoff von
(A) 5 bis 50 % einer hydrophilen Polyesterkomponente und
(B) 95 bis 50 % eines Hydroxylgruppen- und Säuregruppen-haltigen Acrylatcopolymeren.

2. Wäßrige Acrylatharzdispersion nach Anspruch 1, dadurch gekennzeichnet, daß das Acrylatcopolymer (B) eine Hydroxylzahl von 40 bis 200 mg/g und eine Säurezahl von 15 bis 50 mg/g aufweist.

3. Wäßrige Acrylatharzdispersion nach Anspruch 1, dadurch gekennzeichnet, daß das Acrylatcopolymer (B) durch radikalische Copolymerisation in Substanz von 60 bis 95 Teilen mindestens zweier olefinisch ungesättigten Monomeren, von denen mindestens eines eine olefinisch ungesättigte Carbonsäure und mindestens ein Hydroxyalkylester einer olefinisch ungesättigten Carbonsäure ist, in Gegenwart von 5 bis 40 Teilen mindestens eines Glycidylesters einer in α-Stellung verzweigten aliphatischen gesättigten Monocarbonsäure hergestellt wird.

4. Wäßrige Acrylatharzdispersion nach Anspruch 1, dadurch gekennzeichnet, daß das Acrylatcopolymer (B) durch radikalische Copolymerisation in Substanz von
a) 5 bis 40, vorzugsweise 10 bis 30 Teilen mindestens eines Glycidylesters einer in α-Stellung verzweigten aliphatischen gesättigten Monocarbonsäure,
b) 0 bis 30 Teilen mindestens eines Diesters einer α,β-olefinisch ungesättigten Dicarbonsäure mit 1 bis 8 C-Atomen in der Estergruppe,
c) 0 bis 70, vorzugsweise 0 bis 45 Teilen mindestens eines vinylaromatischen Kohlenwasserstoffs,
d) 0 bis 60, vorzugsweise 10 bis 40 Teilen eines Alkylesters einer α,β-olefinisch ungesättigten Carbonsäure, vorzugsweise (Meth)acrylsäurealkyl- oder cycloalkylester, welche einen Alkyl- oder Cycloalkylrest mit 1 bis 18 C-Atomen aufweisen,
e) 2 bis 40 Teilen mindestens einer α,β-olefinisch ungesättigten Carbonsäure, vorzugsweise (Meth)acrylsäure, wobei die molare Menge der Komponente e) stets größer ist als die molare Menge der Komponente a),
f) 5 bis 40 Teilen mindestens eines Hydroxyalkylesters einer α,β-olefinisch ungesättigten Carbonsäure, vorzugsweise eines Esters der (Meth)acrylsäure mit mehrwertigen aliphatischen Alkoholen mit 2 bis 6 C-Atomen,
wobei die Copolymerisation in Substanz oder in Gegenwart eines wasserverdünnbaren Lösemittels durchgeführt wird.

5. Wäßrige Acrylatharzdispersion nach Anspruch 1, dadurch gekennzeichnet, daß das Acrylatcopolymer (B) durch radikalische Copolymerisation eines Glycidylesters stark verzweigter Monocarbonsäuren mit 9 bis 11 C-Atomen als Komponente a) erhalten wird.

6. Wäßrige Acrylatharzdispersion nach Anspruch 1, dadurch gekennzeichnet, daß das Acrylatcopolymerisat durch radikalische Copolymerisation von Isobornyl(meth)acrylat als Komponente d) erhalten wird.

7. Wäßrige Acrylatharzdispersion nach Anspruch 1, dadurch gekennzeichnet, daß die Polymerisation in einem wasserverdünnbaren Lösemittel durchgeführt wird, dessen Masse 3 bis 35 %, bevorzugt 10 bis 25 % der Summe der Massen von Polymer und Lösemittel beträgt, und das ganz oder teilweise gemeinsam mit den Monomeren c) bis f) zugegeben wird.

8. Wäßrige Acrylatharzdispersion nach Anspruch 1, dadurch gekennzeichnet, daß die hydrophilen Polyester (A) lediglich aus aliphatischen Edukten hergestellt werden.

9. Wäßrige Acrylatharzdispersion nach Anspruch 1, dadurch gekennzeichnet, daß die Polyester (A) aus hydrophilen Bausteinen und difunktionellen aliphatischen Verbindungen hergestellt werden, deren funktionelle Gruppen ausgewählt sind aus Säuregruppen und Hydroxylgruppen.

10. Wäßrige Acrylatharzdispersion nach Anspruch 8, dadurch gekennzeichnet, daß die hydrophilen Bausteine in einer Menge eingesetzt werden, die einem Stoffmengenanteil von 1 bis 20 % bezogen auf die Summe der Stoff mengen der Edukte des Polyesters (A) entspricht.

11. Wäßrige Acrylatharzdispersion nach Anspruch 8, dadurch gekennzeichnet, daß die hydrophilen Bausteine des Polyesters (A) ausgewählt sind aus ionischen, ionogenen und nichtionischen hydrophilen Verbindungen, die jeweils zwei funktionelle Gruppen tragen ausgewählt aus Hydroxyl- und Carbonsäuregruppen.

12. Wäßrige Acrylatharzdispersion nach Anspruch 8, dadurch gekennzeichnet, daß zur Herstellung der Polyester (A) zweibasige Säuren und Dihydroxyaliphaten eingesetzt werden, von denen jeweils bis zu 10 % der Stoffmenge durch drei- oder mehrbasige Säuren und aliphatischen Verbindungen mit drei oder mehr Hydroxylgruppen ersetzt sind.

13. Wäßrige Acrylatharzdispersion nach Anspruch 8, dadurch gekennzeichnet, daß zur Herstellung der Polyester (A) zweibasige Säuren und Dihydroxyaliphaten eingesetzt werden, von denen jeweils bis zu 10 % der Stoffmenge durch drei- oder mehrbasige Säuren und aliphatischen Verbindungen mit drei oder mehr Hydroxylgruppen und jeweils bis zu 3 % der Stoffmenge durch einbasige Säuren und Monohydroxyverbindungen ersetzt sind.

14. Wäßrige Acrylatharzdispersion nach Anspruch 9, dadurch gekennzeichnet, daß zur Herstellung der Polyesterkomponente (A) aliphatische Dicarbonsäuren oder deren esterbildenden Derivaten mit 2 bis 40 Kohlenstoffatomen und aliphatische Dihydroxyverbindungen mit 2 bis 40 Kohlenstoffatomen eingesetzt werden.

15. Verwendung der wasserverdünnbaren Dispersionen nach Anspruch 1 als Bindemittel in wasserverdünnbaren Einbrenn-Klarlacken oder wasserverdünnbaren Einbrenn-Unilacken.

16. Verwendung der wasserverdünnbaren Dispersionen nach Anspruch 1 als Bindemittel in wasserverdünnbaren Einbrenn-Klarlacken oder wasserverdünnbaren Einbrenn-Unilacken zusammen mit hochreaktiven, teilverätherten Melamin-Formaldehydharzen als Härter.

17. Verwendung der wasserverdünnbaren Dispersionen nach Anspruch 1 als Bindemittel in wasserverdünnbaren Zweikomponentenlacken.

18. Verwendung der wasserverdünnbaren Dispersionen nach Anspruch 1 als Bindemittel in wasserverdünnbaren Zweikomponentenlacken mit einer Isocyanatkomponente als Härter.
